**Europäisches Patentamt**

**European Patent Office**

**Office européen des brevets**

(11) Publication number: **0 102 791**
**B1**

# (12) EUROPEAN PATENT SPECIFICATION

(45) Date of publication of patent specification: **04.01.89**

(21) Application number: **83304765.7**

(22) Date of filing: **17.08.83**

(51) Int. Cl.⁴: **F 24 J 2/04, F 24 J 2/40, F 24 D 17/00, F 24 D 19/10**

(54) Solar energy collection system.

(30) Priority: **20.08.82 GB 8223994**

(43) Date of publication of application:
**14.03.84 Bulletin 84/11**

(45) Publication of the grant of the patent:
**04.01.89 Bulletin 89/01**

(84) Designated Contracting States:
**AT BE DE FR IT LU NL SE**

(56) References cited:
**EP-A-0 029 952
DE-A-2 614 142
DE-A-2 837 565
FR-A-2 448 180
GB-A-1 518 789
GB-A-2 082 757
US-A-4 010 734
US-A-4 256 089
US-A-4 305 379**

(73) Proprietor: **THE UNIVERSITY OF BIRMINGHAM
Chancellor's Court P.O. Box 363
Birmingham B15 2TT (GB)**

(72) Inventor: **Jesch, Leslie F.
192 Franklin Road
Birmingham B30 2HE (GB)**

(74) Representative: **Ayers, Martyn Lewis Stanley
et al
J.A. KEMP & CO. 14 South Square Gray's Inn
London, WC1R 5EU (GB)**

Courier Press, Leamington Spa, England.

# EP 0 102 791 B1

**Description**

The present invention relate to an energy collection system.

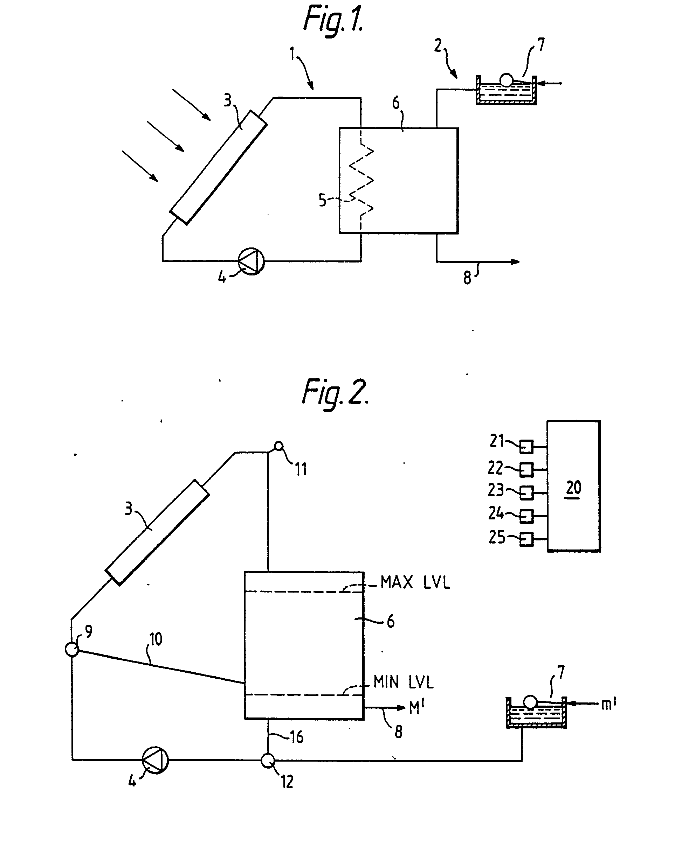

A conventional water heating system using solar energy collection is shown in Figure 1 of the accompanying drawings. There are two separate circuits, a primary circuit 1 and a secondary circuit 2 which are in heat exchange relationship with one another.

The primary circuit 1 comprises one or more inclined solar collectors 3 through which a heat transfer medium is caused to circulate by means of a constant flow rate pump 4. The heated water is pumped by the pump 4 to a heat exchange coil 5 located in a hot water tank 6 which stores the heated water. The volume of the secondary water in the tank 6 is maintained by means of a header tank and ballcock arrangement 7 connected to the cold water mains supply. A hot water supply is available via an outlet line 8 from the tank 6.

According to the conventional design philosophy, the flow rate in the primary circuit as the mass of secondary water in the tank 6 should be as large as possible for greatest efficiency. This is in order to reduce the temperature rise in the collectors(s) 3. This is because the collector losses relate to the average temperature of the collector panel 3: the lower that average temperature is, the lower the losses will be. The disadvantage of this, however, is that the high flow rate results in high pumping costs and the relatively low collector exit temperature is soon approached by the temperature of the store (the secondary water in the tank 6) and thus the differential temperature controller thermostat conventionally used to control the pump 4 will shut off the pump because it is usually set to operate only when the collector outlet temperature is higher by, say, 2 degrees centigrade than the store temperature; this will happen even though there is still solar energy to be collected during the day.

The present invention seeks to provide an energy collection system, particularly but not exclusively for collecting solar energy, of improved performance.

The present invention is based on three concepts which depart radically from the conventional systems. Broadly these are as follows:

Firstly, that the flow rate through the collector or collectors should be varied in accordance with the received energy flux, the higher the received energy flux the higher the flow rate;

Secondly, that the volume of the working medium in the thermal store can be allowed to vary substantially, depending on the supply and demand conditions; and

Thirdly, that the received energy flux should be measured directly (e.g. using a solarimeter), rather than indirectly (e.g., by measuring the collector outlet temperature).

Use of these concepts enables the hardware of the system to be redesigned in an advantageous manner in that the closed recirculation path of the primary circuit need no longer be used and instead cold mains water may be delivered directly to the solar collector(s) and, having been heated thereby, be delivered to the storage tank, from which it may be drawn for use, the conventional means to maintain a constant or lower-than-usual volume in the storage tank being eliminated.

It has been found that, contrary to what one would expect, the elimination of recirculation through the collector does not necessitate a very large storage tank; in fact by appropriately selecting the flow rate characteristics during design the storage tank can be rather smaller than is required with a convention system of equivalent capacity.

Thus the present invention provides an energy collection system comprising a collector for heating a working medium passing therethrough, a store for storing the working medium after passage through the collector and system control means arranged to measure the energy flux to the collector characterised in that the system control means are arranged to control the rate of flow of working medium through the collector proportionally to the measured energy flux to the collector to maintain a substantially constant rise in temperature of the working medium across the collector so that given a constant inlet temperature a substantially constant collector outlet temperature is obtained.

Preferably the system control means is equipped with various sensors and control valves, etc to relate the mass flow rate $m'$ to the incoming radiation density $I_G$ so as to achieve a constant collector outlet temperature, which is desirable for higher efficiency energy collection. The controller may likewise relate to the flow rate through the solar collector(s) to the load $M'$ so as to maximise the energy collected.

The above and other features of the invention will be more fully described by way of example with reference to the accompanying drawings in which like reference numerals have been used to designate like parts. In the drawings:—

Figure 1 is a schematic diagram of the prior art solar water heating system referred to above;

Figure 2 is a schematic diagram of one embodiment of the present invention;

Figure 3 corresponds to Figure 2 but of a second embodiment of the present invention;

Figure 4 shows in block schematic form one form of controller which may be used in embodiments of the present invention;

Figure 5 is a schematic diagram of a third embodiment of the invention;

Note that the Figures are purely symbolic showing the functional interconnections of the illustrated systems and are not intended necessarily to reflect their physical layout.

A first embodiment of the present invention is shown in Figure 2. It will be seen that unlike the prior art of Figure 1, the header tank 7 supplied with cold mains water is now connected directly to the pump 4

2

which pumps it to the solar collector 3. Heated water from the collector 3 is likewise delivered direct to the storage tank 6 from which it may be drawn by outlet line 8 by the load. In this, and the other embodiments to be described, the solar collection system may be the only source of heat for the water in the tank 6 or alternatively there may be a further source of heat e.g. an electrical or gas heater also available.

Between the pump 4 and the inlet of the collector 3 is a 3-way valve 9 which, in one position connects the pump 4 to the collector 3 and in the other position connects the collector 3 to a drain back line 10 to the storage tank 6. An automatically opening air inlet 11 is provided to assist this drain back and subsequent refill of the primary circuit. A further 3-way valve 12 is provided in the line to the inlet of the pump 4 so as to allow, under certain circumstances, recirculation through the collector panel 3 of water from the storage tank 6 via a recirculation line 16.

The operation of the pump 4, valves 9 and 12 is under the control of a system controller 20 which is provided with various sensors which will be described below.

In the variable volume system of Figure 2 the tank 6 has a minimum and a maximum allowed level (controlled and protected by sensors associated with the controller 20 which guarantee that these limits are not exceeded) and during use it is allowed to change its volume; when there is more solar radiation the system collects more energy by running the pump 4 and filling the tank 6. When there is insufficient solar radiation but there is demand by the load, the pump 4 is off and the tank 6 is being depleted. The benefit of the variable volume operating mode is that it will maximise the energy collection while not cooling the storage tank 6 with cold water make-up: instead it depletes itself until the next period of solar radiation which will provide hot water with which the storage tank 6 is filled. The expectation of future probabilities of solar radiation intensity as well as its temporal distribution and the expectation of future probabilities of demand levels and their temporal distribution is important for the correct design of the variable volume system. These can be calculated with the following restriction applied: $\int m' \, dt = \int M' dt$ which is required because the variable volume system has a different layout from that of Figure 1 and the instantaneous cold water supply flow rate is not equal to the load at all times. Even so the total volumes must be equal over longer periods of time as expressed by equation 1. The fact that unlike Figure 1, in Figure 2 the cold water supply from the mains is connected directly to the collector 3 is important in that it ensures that the collector 3 is always fed by the coldest supply possible. This is a significant improvement on the recirculation of the prior art constant volume system where the gradually increasing tank temperature will gradually increase the collector inlet temperature and thereby reducing the collector efficiency. In the variable volume system of Figure 2 the collector gets the coldest inlet and this means the highest collector efficiency.

For those instances when solar radiation levels justify collection but there is no demand from the load and the tank 6 is full, the system provides a recirculation option, by the valve 12 connecting the line 16 to the pump 4, which although less efficient nevertheless collects some extra energy.

For frost protection the automatic drain back is provided which makes sure that no water is left in the collector at times when the combination of solar gain and heat loss to the ambient air would mean a probable danger to the system by bursting pipes in which the water froze. Thus each time the controller 20 shuts off the pump 4 it operates the valve 9 to connect the collector 3 to the drainback line 10. This returns the water from the collector and from the remainder of the primary circuit 1 to the tank every time the pump is not operating, as shown on Figure 2.

To facilitate the drain-back and the subsequent refilling of the primary circuit the automatic air inlet device 11 is put at the highest point in the pipe. This allows air in during emptying and allows air out during filling of the circuit.

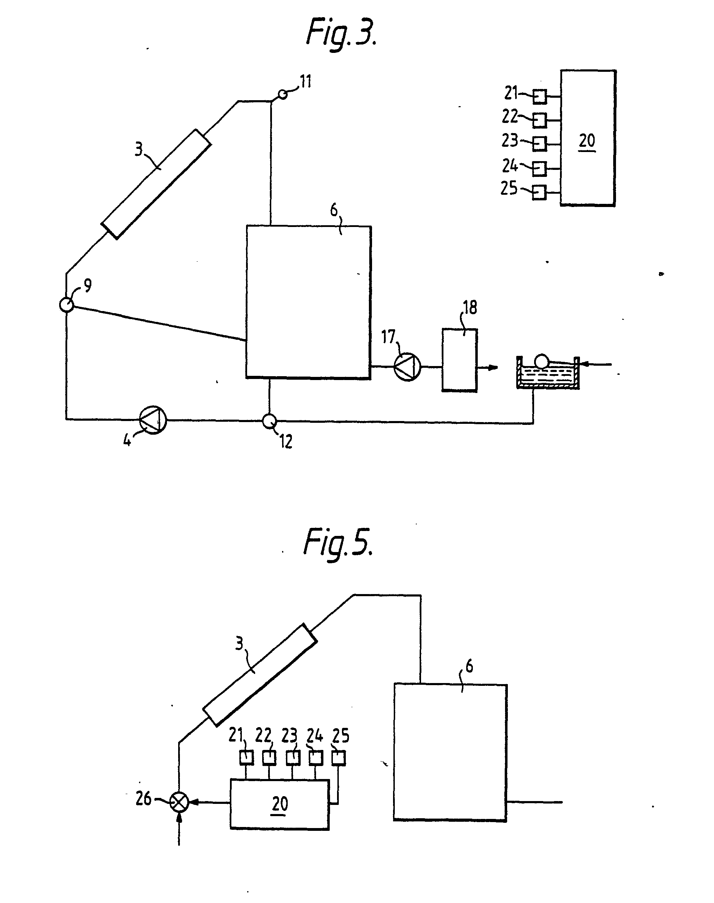

For countries where the hot water system is required to be pressurised, as it is for example in the United States, a hot water delivery pump 17 and a small accumulator vessel 18 may be provided between the tank 6 and the load. This is shown in Figure 3 where the cold water mains again feeds the system directly, entering the tank 6 brings the water pressure to atmospheric level and the second pump 17 repressurises the hot water to the required level. This is an acceptable practice wherever high pressure hot water is needed while the cold water inlet may come for instance from a well or a low pressure mains system.

As mentioned above the conventional solar heating system uses high flow rate at a fixed mass flow rate in the primary circuit (collector—tank—pump) in order to reduce the temperature rise in the collector.

In the illustrated embodiments of the invention, where there is a variable flow rate through the collector 3, the controller 20 is arranged to relate the mass flow rate m' to the incoming radiation intensity $I_G$ and to obtain a constant collector outlet temperature which is desirable for high efficiency energy collection. Moreover by collecting high energy at high flow rates and low radiation at low flow rates it will be able to collect useful energy even when the conventional system would have already stopped collecting because the temperature resulting from the low radiation was not high enough to allow operation. (Also when the collector exit temperature would have been too high for safety and the fixed flow rate constant velocity system would have to stop and go into a safety shut down mode). The variable flow rate systems change m' with $I_G$. The control may come from either a collector outlet temperature sensor or from a radiation sensor directly, the latter method having proved to be the best. The radiation sensor may be a solarimeter which has negligible inertia and responds to the changes in radiation very readily. The electrical signal from the solarimeter can be used to control the velocity of the primary flow. This can be

EP 0 102 791 B1

done either with an electronic speed control for the pump or more preferably with a motorised valve which opens and closes partially and proportionally to the radiation signal. In this case the mains water pressure may provide the flow without a pump and the valve modulates the flow rate according the radiation. Such is the arrangement shown on Figure 5 which contains three significant features of the invention: variable volume (VV) variable flow rate (VF) and radiation control (RC) for the solar heating system.

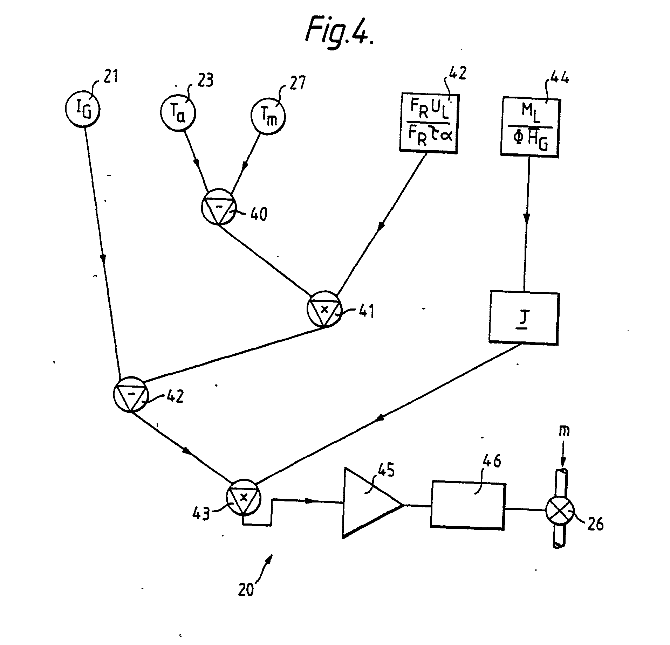

As shown in Figure 5, the controller 20 has associated with it the solarimeter 21 to measure the radiation received, $I_G$, and four temperature sensors 22—24 sensing the four temperatures $T_m$, $T_o$, $T_A$ and $T_T$, these being, respectively, the temperature of the mains water, the water at the outlet of the collector 3, the ambient temperature, and the temperature of water in the tank 25. The controller can perform many different functions. One such mode, the radiation control mode, is shown in Figure 5. The circuitry shown in Figure 4 which may, if electronic, be of the analogue or digital type or a hybrid of the two, is intended to implement a control scheme based on the derivation given below. Outputs from the ambient and cold water temperature sensors 23 and 27 are fed to a subtractor 40 which forms the difference between them. The output of this subtractor 40 is applied to one input of a multiplier 41, the other input of which is derived from a circuit block 42 which provides a constant output signal representing the multiplying factor in the definition of $I_c$ given below. The output of multiplier 41 is thus representative of the critical irradiance level $I_c$. The output from multiplier 41 is subtracted by substractor 42 from the signal from sensor 21 representing the global irradiance $I_G$ and the output of this is in turn applied to a multiplier 43. The other input of multiplier 43 is from a circuit block 44 which provides a constant signal representative of the control parameter J. The product at the output of multiplier 43 is amplified by a signal amplifier 45 and used to drive a proportional actuator circuit 45/46 which, where the flow through the collector m' is to be controlled by a proportional control valve 26.

Alternatively, where the flow m' is to be controlled by use of a variable speed pump, the output of amplifier 45 could be applied to a closed-loop or open-loop motor speed control circuit.

The controller may also comprise other circuitry, not shown in Figure 4, for carrying out various other control functions, such as, in the case of the embodiments of Figures 2 and 3, the control of the valve 9 and 12 and also flow control valves to keep the water level in the storage tank 6 between its prescribed limits.

It should be noted that this invention is applicable to many variable heat inputs from solar or non solar sources and to different kind of loads associated with any demand distribution in time including those encountered in commercial and industrial processes not just domestic hot water production. The following solution which is in abbreviated form of equation 1 has been obtained by the inventor. The variables are as follows

$I_G$ = global irradiance on a tilted surface
$I_c$ = critical level of radiation below which system should not be operated
$t$ = time
$M_L$ = energy represented by load is also = M'dt
$\Phi$ = utilizability factor
$H_G$ = average total radiation available on tilted surface
$J$ = collector flow rate control parameter
$To$ = collector outlet temperature
$T_T$ = storage tank temperature
$T_m$ = mains cold water temperature
$T_a$ = ambient air temperature.

$$F_R U_L \text{ and } F_R \cdot \widehat{\iota\alpha} \text{ are collector characterisation}$$
$$\text{dependent on flow rate}$$

$$m' = f(t); \qquad\qquad M' = f2(t);$$
$$\text{(primary flow rate)} \qquad \text{(secondary flow rate)}$$
$$\int m'dt = \int M'dt; \qquad f1 \neq f2$$
$$\text{Equal over long period} \qquad \text{But not at any one time}$$

$$m' = J \cdot (I_G - I_c) \qquad J = \frac{M_L}{\int (I_G - I_c)dt} \qquad \text{if } \Phi = \leqslant \frac{(I_G - I_c)}{H_G}$$
$$\int M'dt = M_L$$

$$\text{then } J = \frac{M_L}{\Phi \cdot H_g} \quad \cdots \quad \underline{\text{Equ. 2.}}$$

4

and the instantaneous flow rate

$$m' = J.(I_G - I_C) \quad \ldots \ldots \quad \underline{Equ. 3.}$$

$$\text{where } I_C = \frac{F_R U_L.(T_m - T_a)}{F_R (\tau\alpha)}$$

$$m' = \frac{M_L . (I_G - I_C)}{\phi \, H_G}$$

It will be appreciated from the above that the variable J characterises a particular example of the invention and can be used as a control parameter to control the flow rate m' through the collector. It can be seen that the J factor depends on the demand load energy, the utilizability and the total expected average energy gain as given in equation 2. It determines the flow rate variation based on the difference between the available global tilted surface radiation $I_G$ and the critical level of radiation $I_c$ as given in equation 3. Thus the J factor contains all the statistical probabilities of future expectations for load distribution in time $M_L$ and for radiation distribution in time $H_G$.

Different control strategies have been tried and it was found that for instance for the month of May in Brussels (Belgium) with a given inexpensive collector the total useful energy collected was as shown in Table 1 below:—

### TABLE 1

| | |
|---|---|
| Variable volume fixed flow rate | 9.4 GJ |
| VV VF with temperature control of flow rate | 10.38 GJ |
| VV VF RC with radiation control of flow rate | 11.04 GJ |

In comparing these we can see that the VV VF RC gives the best result amongst the flow control strategies once the variable volume principle has been accepted.

When a comparison is made between the conventional system and ones embodying this invention an even more significant improvement can be seen to have been achieved by the invention. This is shown in Table 2 below, where reference is made to the same system and radiation conditions as above expressing the collected energy in gigajoules (GJ).

### TABLE 2

| | |
|---|---|
| Conventional system with fully mixed store | 8.66 GJ |
| Highly stratified system fixed volume | 10.29 GJ |
| Variable volume fixed flow | 9.4 GJ |
| VV VF TC (temp. contr.) | 10.38 GJ |
| VV VF RC (rad. contr.) | 11.04 GJ |

This comparison shows that the best system is the VV VF RC which gives 27.5% improvement over the conventional system and 7.3% improvement over the highly stratified fixed volume system, which is in development stage and not yet achievable reliably due to the fact that any movement of the water in the fixed volume constant storage tank is likely to destroy the stratification.

Further comparisons have been made with the same system operating in a different climate. A computer simulation for Madison, Wisconsin, USA with a northern continental climate but with less cloudiness than in Brussels given below in table 3 shows a clear advantage across the whole range of strategies possible with the invention.

TABLE 3

| Conventional system fully mixed const. volume | 30.7% |
| --- | --- |
| Highly stratified system constant volume | 37.5% |
| VV FF (Var.vol, fix flow) | 45.1% |
| VV VF (Var.vol, var flow) with temp. control | 50.4% |
| VV VF RC (var.vol, var flow, rad. control) | 52.9% |

These numbers refer to the percentage of total heating achieved by a given solar installation having the same collectors in area and in quality, but having different plumbing systems and tanks and control strategies. They demonstrate clearly that the VV VF RC system gives a very significant improvement over the conventional system (52.9% versus 30.7%).

It should be mentioned that full economic comparisons cannot be made without the detailed knowledge of local costs, but the comparisons made here are based on energy savings on a comparable basis.

The invention also provides that these high system efficiencies which result in high energy savings are achieved with:—

a. at very low flow rates (which make the operating costs low)

b. with smaller than usual tank sizes (low initial cost)

c. simpler and less critical installation

d. with longer periods of solar radiation utilised and more energy collected, thus making the use of solar energy for heating purposes more attractive economically.

Figure 5 shows a simplified embodiment of the present invention in which the incoming cold water is delivered direct to the solar collector 3 with the pump 4 omitted and replaced by a proportioning control valve 26 whose setting is adjusted by the controller 20 so that the flow rate is varied with the received solar energy in the manner described above. It will be seen that the embodiment of Figure 5 gives a very simple arrangement.

A system according to the present invention could incorporate highly stratified storage tanks in series or shunt mode.

**Claims**

1. An energy collection system comprising a collector (3) for heating a working medium passing therethrough, a store (6) for storing the working medium after passage through the collector (3) and the system control means (20) arranged to measure the energy flux to the collector (3), characterised in that the system control means (20) are arranged to control the rate of flow of working medium through the collector (3) proportionally to the measured energy flux to the collector (3) to maintain a substantially constant rise in the temperature of the working medium across the collector so that given a constant collector inlet temperature a substantially constant collector outlet temperature is obtained.

2. An energy collection system according to claim 1 characterised in that the system control means are arranged to control the system so that whenever the store (6) is not full, the working medium delivered to the collector (3) for heating is cold working medium previously unheated by the collector (3).

3. An energy collection system according to claim 1 or 2, wherein the system control means (20) is arranged to permit the quantity of working medium in the store (6) to deplete according to demand by a substantial amount depending on the sensed energy flux available to the collector (3).

4. A system according to claim 1, 2 or 3 further comprising means (2) for measuring solar radiation in the vicinity of the collector (3) to measure the available energy flux and for delivering a signal representative thereof to the system control means (20).

5. A system according to any one of the preceding claims, wherein the working medium flow is controlled using a delivery pump (4) or valve (26) under the control of the system control means (20).

6. A system according to any one of the preceding claims, wherein the delivery means is arranged so as to deliver to the energy collector (3) only fresh working medium which is previously unheated by the energy collector (3).

7. A system according to any one of the preceding claims wherein a recirculation path (16, 12) for working medium from the store (6) to the collector (3) is provided so that when the store (6) is full and energy is available for collection, the system control means (20) may control the delivering means to recirculate working medium from the store (6) to the collector (3).

8. A system according to any one of the preceding claims wherein a drain-back path (9, 10), under the

6

control of the system control means (20), is provided to drain working medium from the collector (3) under conditions in which freezing would be likely to occur.

9. A system according to any one of the preceding claims wherein the working medium is water.

10. A system according to any one of the preceding claims wherein the collector (3) is connected via flow control (4, 26) means to the water mains.

11. A system according to any one of the preceding claims wherein the system control means (20) is arranged to control the flow of working medium through the collector (3) such that the mass flow, m′, varies so as to be proportional to $M_L . (I_G—I_c)H_G$ where:—

$M_L$ = energy represented by load

$I_c$ = critical level of energy flux available below which system would not be operated.

$I_G$ = total energy flux available to collector (3) and

$H_G$ = average total energy flux available.

12. A system according to any one of the preceding claims wherein the collector (3) is, or includes, a solar collector.


## Patentansprüche

1. Energiesammelsystem mit einem Kollektor (3) zur Erwärmung eines diesen durchströmenden Arbeitsmittels, mit einem das Arbeitsmittel nach dem Durchströmen des Kollektors (3) speichernden Speicher (6) und mit einer zur Messung des Energieflusses zum Kollektor (3) ausgebildeten System-Steuereinrichtung (20), dadurch gekennzeichnet, daß die System-Steuereinrichtung (20) zur Regelung der Durchflußmenge des Arbeitsmittels durch den Kollektor (3) proportional zum gemessenen Energiefluß zum Kollektor (3) eingerichtet ist, um einen im wesentlichen konstanten Temperaturanstieg des Arbeitsmittels durch den Kollektor hindurch aufrechtzuerhalten, so daß bei einer bestimmten Kollektor-Eintrittstemperatur eine im wesentlichen konstante Kollektor-Austrittstemperatur erhalten wird.

2. Energiesammelsystem nach Anspruch 1, dadurch gekennzeichnet, daß die System-Steuereinrichtung für die Steuerung des Systems derart eingerichtet ist, daß, wann immer der Speicher (6) nicht voll ist, das dem Kollektor (3) zur Erwärmung zugeführte Arbeitsmittel kaltes, vorher vom Kollektor (3) nicht erwärmtes Arbeitsmittel ist.

3. Energiesammelsystem nach Anspruch 1 oder 2, dadurch gekennzeichnet, daß die System-Steuereinrichtung (20) so eingerichtet ist, ein Entleeren der Menge an Arbeitsmittel im Speicher (6) entsprechend dem Bedarf um einen wesentlichen Wert in Abhängigkeit von dem ermittelten, am Kollektor (3) verfügbaren Energiefluß zu ermöglichen.

4. System nach Anspruch 1, 2 oder 3, gekennzeichnet durch eine Einrichtung (21) zur Messung der Sonnenstrahlung in der Nachbarschaft des Kolletors, um den verfügbaren Energiefluß zu messen und ein dafür kennzeichnendes Signal an die System-Steuereinrichtung (20) abzugeben.

5. System nach einem der vorhergehenden Ansprüche, dadurch gekennzeichnet, daß der Arbeitsmittelfluß durch Verwendung einer Speisepumpe (4) oder eines Ventils (26) unter Steuerung der System-Steuereinrichtung (20) geregelt wird.

6. System nach einem der vorhergehenden Ansprüche, dadurch gekennzeichnet, daß die Speiseeinrichtung so eingerichtet ist, daß sie dem Energiekollektor (3) nur frisches, vorher durch den Energiekollektor (3) nicht erwärmtes Arbeitsmittel zuführt.

7. System nach einem der vorhergehenden Ansprüche, dadurch gekennzeichnet, daß ein Rücklaufweg (16, 12) für das Arbeitsmittel vom Speicher (6) zum Kollektor (3) vorhanden ist, so daß, wenn der Speicher (6) voll ist und Energie für ein Sammeln zur Verfügung steht, die System-Steuereinrichtung (20) die Speiseeinrichtung zur Rezirkulation von Arbeitsmittel vom Speicher (6) zum Kollektor (3) steuern kann.

8. System nach einem der vorhergehenden Ansprüche, dadurch gekennzeichnet, daß ein der Regelung der System-Steuereinrichtung (20) unterworfener Ablaßrücklaufweg (9,10) vorhanden ist, um Arbeitsmittel vom Kollektor (3) unter Umständen, bei denen eine Frostwahrscheinlichkeit besteht, abzulassen.

9. System nach einem der vorhergehenden Ansprüche, dadurch gekennzeichnet, daß das Arbeitsmittel Wasser ist.

10. System nach einem der vorhergehenden Ansprüche, dadurch gekennzeichnet, daß der Kollektor (3) über eine Durchflußregeleinrichtung (4, 26) mit dem Leitungswassernetz verbunden ist.

11. System nach einem der vorhergehenden Ansprüche, dadurch gekennzeichnet, daß die System-Steuereinrichtung (20) zur Regelung des Arbeitsmittelflusses durch den Kollektor (3) derart eingerichtet ist, daß der Massenstrom m′ sich ändert, so daß er proportional ist zu $M_L . (I_G—I_c) H_G$, worin ist:

$M_L$ = die durch die Belastung dargestellte Energie,

$I_c$ = das kritische Niveau des verfügbaren Energieflusses, unter welchem das System nicht betrieben werden kann,

$I_G$ = Gesamt-Energiefluß, der am Kollektor (3) verfügbar ist, und

$H_G$ = mittlerer verfügbarer Gesamt-Energiefluß.

12. System nach einem der vorhergehenden Ansprüche, dadurch gekennzeichnet, daß der Kollektor (3) ein Sonnenkollektor ist oder einen solchen umfaßt.

**Revendications**

1. Système de captation d'énergie comprenant un capteur (3) pour chauffer un coloporteur circulant à travers celui-ci, un moyen de stockage (6) pour stocker le caloporteur après son passage à travers le capteur (3) et un moyen de commande (20) du système conçu pour mesurer le flux d'énergie reçu par le capteur (3), caractérisé en ce que le moyen de commande (2) du système est conçu pour commander le débit du caloporteur dans le capteur (3) proportionnellement au flux d'énérgie mesuré reçu par le capteur (3) pour maintenir une élévation sensiblement constante de la température du caloporteur à travers le capteur de façon qu'avec une température constante donnée à l'entrée du capteur on obtienne une température sensiblement constante à la sortie du capteur.

2. Système de captation d'énergie selon la revendication 1, caractérisé en ce que le moyen de commande du système est conçu pour commander le système de façon que chaque fois que le moyen de stockage (6) n'est pas plein, le caloporteur fourni au capteur (3) pour être chauffé soit un caloporteur froid non chauffé précédemment par le capteur (3).

3. Système de captation d'énergie selon la revendication 1 ou 2, dans lequel le moyen de commande (20) du système est conçu pour permettre à la quantité de caloporteur présente dans le moyen de stockage de diminuer à la demande d'une quantité substantielle en fonction du flux détecté d'énergie à la disposition du capteur (3).

4. Système selon la revendication 1, 2 ou 3, comportant en outre un moyen (2) pour mesurer le rayonnement solaire au voisinage du capteur (3) pour mesurer le flux d'énergie disponible et pour fournir au moyen de commande (20) du système un signal représentatif de celui-ci.

5. Système selon l'une quelconque des revendications précédentes, dans lequel la circulation du caloporteur est commandée à l'aide d'une pompe (4) ou d'une soupape (26) de refoulement commandée par le moyen de commande (20) du système.

6. Système selon l'une quelconque des revendications précédentes, dans lequel le moyen d'alimentation est conçu pour ne refouler jusqu'au capteur (3) d'énergie que du caloporteur frais non chauffé précédemment par le capteur (3) d'énergie.

7. Système selon l'une quelconque des revendications précédentes, dans lequel un parcours de recirculation (16, 12) pour le caloporteur depuis le moyen de stockage (6) jusqu'au capteur (3) est présent de façon que, lorsque le moyen de stockage (6) est plein et qu'il y a de l'énergie à capter, le moyen de commande (20) du système peut commander le moyen d'alimentation pour faire recirculer du caloporteur depuis le moyen de stockage (6) jusqu'au capteur (3).

8. Système selon l'une quelconque des revendications précédentes, dans lequel un parcours de vidange (9, 10), commandé par le moyen de commande (20) du système, est présent pour vidanger le caloporteur présent dans le capteur (3) en cas de risque de gel.

9. Système selon l'une quelconque des revendications précédentes, dans lequel le caloporteur est de l'eau.

10. Système selon l'une quelconque des revendications précédentes, dans lequel le capteur (3) est relié au réseau de distribution d'eau par l'intermédiaire d'un moyen (4, 26) de régulation de débit.

11. Système selon l'une quelconque des revendications précédentes, dans lequel le moyen de commande (20) du système est conçu pour réguler le débit du caloporteur dans le capteur (3) de façon que le débit massique m' varie afin d'être proportionnel à $M_L . (I_G-I_C)H_G$, où:

$M_L$ = énergie représentée par une charge

$I_C$ = niveau critique du flux d'énergie disponible au-dessous duquel le système ne fonctionnerait pas.

$I_G$ = flux d'énergie total à la disposition du capteur (3)

$H_G$ = flux total moyen d'énergie disponible.

12. Système selon l'une quelconque des revendications précédentes, dans lequel le capteur est, ou comporte, un capteur solaire.

*Fig.1.*

*Fig.2.*

Fig.3.

Fig.5.

# Fig.4.